# EUROPÄISCHE PATENTSCHRIFT

(11) **EP 1 257 798 B1**
(45) Veröffentlichungstag und Bekanntmachung des Hinweises auf die Patenterteilung: **05.05.2010**
(21) Anmeldenummer: 01927667.4
(22) Anmeldetag: 14.02.2001
(51) Int. Cl.: G01M 3/32

(54) **TANKLECKANZEIGEANLAGE**
TANK LEAK INDICATOR ARRANGEMENT
SYSTEME INDICATEUR DE FUITES D'UN RESERVOIR

(30) Priorität: 18.02.2000 IT BZ000012
(43) Veröffentlichungstag der Anmeldung: 20.11.2002
(73) Patentinhaber: Wolftank Systems SRL, 39100 Bolzano (IT)
(72) Erfinder: BRUNNER, Michael, 80687 München (DE)
(74) Vertreter: Faraggiana, Vittorio
(86) Internationale Anmeldenummer: PCT/EP2001/001624
(87) Internationale Veröffentlichungsnummer: WO 2001/061300

(56) Entgegenhaltungen:
- DE-A- 4 417 624
- DE-U- 29 822 370
- US-A- 5 117 677
- US-A- 5 400 646

## Beschreibung

Die vorliegende Erfindung bezieht sich auf eine Tankleckanzeige gemäß dem Oberbegriff des Patentanspruchs 1.

Es ist bekannt, die Unversehrtheit von Tanks zur Lagerung z.B. von Heizöl über einen Sensor zu überwachen, der mit dem Zwischenraum einer Doppelwand des Tanks selbst verbunden ist: Ein Flüssigkeitsleck aus dem Tank beträgt eine Druckänderung im Zwischenraum, die vom Sensor erfasst wird, der seinerseits an eine Alarmanlage ein Signal sendet.

Diese Vorgangsweise hat sich als sehr wirksam und sicher erwiesen, sie ist jedoch aufwendig und teuer in ihrer Ausführung bei Anwesenheit von mehreren Tanks: Für jeden Tank muss nämlich eine eigens dafür vorgesehene Alarmanlage mit dem entsprechenden Zubehör und den erforderlichen Einbau und Wartung vorgesehen sein.

Die Aufgabe der vorliegenden Erfindung liegt daher darin, die Mängel der herkömmlichen Leckanzeigeanlage für mehrere Lagerbehälter zu beheben und eine Tankleckanzeigeanlage vorzuschlagen, die eine Vielzahl von Tanks bedienen kann, ohne die Wirksamkeit der Alarmanlage herkömmlicher Art zu verlieren.

Diese Aufgabe wird in einer Tankleckanzeigeanlage durch den kennzeichnenden Teil des Anspruchs 1 gelöst.

Durch Vorsehen eines Fluidsammlers zur Speisung des Zwischenraumes eines jeden Tanks zur Verteilung des Fluids an eine Vielzahl von Tanks, wird nur eine einzige Fluidspeisepumpe und nur ein einziger Drucksensor erforderlich sein, der die Druckänderung an der Fluidvorlaufleitung fühlt. Durch Einbau eines Sperrventils bzw. eines Rückschlagventils in einer Richtung in einer jeden Leitung zur Zuführung des Fluids dem Zwischenraum eines jeden Tanks mit einem Druckwärter für jede Leitung kann der vom Leck betroffene Tank genau festgestellt werden.

Das Dokument D1: DE 298 22 370 U (SICHERUNGSGERÄTEBAU GMBH) offenbart (die Verweise in Klammern beziehen sich auf dieses Dokument) eine Tankleckegeanzeigeanlage dieser Art, umfassend eine Fluidspeise- und Anzelgeeinheit, die mit dem Zwischenraum eines Tanks verbunden ist, wobei diese Einheit (2,5) mit dem Zwischenraum (10) einer Vielzahl von Tanks (1) über eine Vorlaufsämmelleitung (14) verbunden ist, wobei von der Vorlaufsammelleitung (14) eine Vielzahl von. Leitungen (13) abgeleitet ist, die jeweils mit dem Zwischenraum (10) von gleich vielen Tanks (1) verbunden sind.

Ähnliche Anlagern werden auch im D2: US-A-5 400 646, im D3: US-A-5 117677 und im D4: DE 4417624 A beschrieben.

In einer bevorzugten Ausführungsform ist ein Fluidlecksammler vorgesehen, der mit der Vorlaufleitung nach jedem Druckwächter in Richtung des Vorlaufs des zu speisenden Fluids verbunden ist,

In einer ersten Variante ist die erfindungsgemäße Anlage für ein Fluid zur Speisung des Zwischenraumes unter Druck vorgesehen, d.h. die Anl.age umfasst eine Druckpumpe.

In einer zweiten Variante ist hingegen eine Vakuumpumpe vorgesehen, die dazu bestimmt ist, den Zwischenraum unter Unterdruck zu setzen.

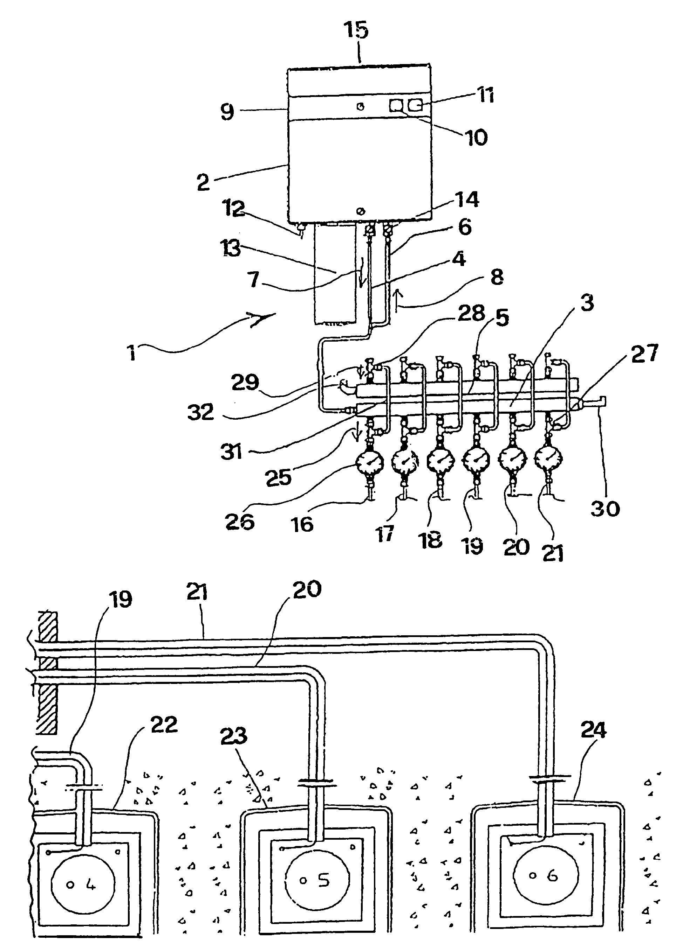

Weitere Merkmale und Einzelheiten gehen aus den Patentansprüchen und aus der Beschreibung eines bevorzugten, in der beigefügten Zeichnung dargestellten Ausführungsbeispiels hervor.

Die einzige Figur stellt schematisch eine Tankleckanzeigeanlage mit den entsprechenden, zu überwachenden Tanks dar.

In der Figur ist mit der Bezugsziffer 1 in ihrer Gesamtheit eine Tankleckanzeigeanlage beispielsweise für Heizöl, Kraftstoff, Gas usw. angegeben.

Die Anlage 1 umfasst eine Fördereinheit 2, eine Sammelleitung 3, die über eine Vorlaufleitung 4 mit einer nicht gezeigten Pumpe der Fördereinheit 2 verbunden ist, und eine Rücklaufsammelleitung 5, die mit einem Sicherheitsventil 32 versehen ist. Von der Vorlaufleitung ist eine Rücklaufleitung 6 abgeleitet, die mit einem nicht gezeigten Drucksensor der Fördereinheit 2 verbunden ist.

Im vorliegenden Fall ist die Pumpe eine Druckpumpe, welche die Sammelleitung gemäß der Förderrichtung 7 beispielsweise mit Luft speist, die unter den folgenden beschriebenen Bedingungen zur Einheit 2 gemäß der Rücklaufrichtung 8 zurückkehren kann.

Die Förder- und Anzeigeeinheit 2 umfasst eine Leckanzeige 9, eine Grünlichtanzeige 10 zur Anzeige wann "das Gerät ist in Betrieb", eine Rotlichtanzeige 11 zur Anzeige des "Alarms" sobald Leckagen festgestellt werden. Für eine gute Betriebsweise, die Sicherheit und die Wartung, ist die Einheit 2 auch mit einem Schalter 12, einer Trocknungsampulle 13, einer Entlüftung 14 und einem Sicherheitsventil 15 versehen, Bestandteile bekannter Art, die daher nicht weiter beschrieben werden.

Vom Vorlaufsammler 3 ist eine Vielzahl von Förderleitungen, beispielsweise sechs Leitungen von 16 bis 21 abgeleitet, die mit gleich vielen Tanks verbunden sind, von denen in der Figur nur die Tanks 22, 23 und 24 dargestellt sind, die mit den Leitungen 19, 20 und 21 verbunden sind, um gemäß des Vorlaufrichtungspfeiles 25 gespeist zu werden.

Jede Förderleitung 16 bis 21 besitzt ein Manometer 26. Zwischen diesem und dem Anschluss einer jeder Förderleitung 16 - 21 an der Vorlaufsammelleitung 3 ist ein Sperrventil 27 eingebaut, das den Luftdurchfluss in Richtung der nicht des weiteren angegebenen Zwischenräumen, da bekannter Art, nicht aber in umgekehrter Richtung erlaubt.

Zwischen jedem Manometer 26 und jedem Sperrventil 27 ist ein Bypass-Rohr 21 abgeleitet, das unter Zwischenschaltung eines Sperrventils 28 mit der Rücklaufsammelleitung 5 verbunden ist. Das Sperrventil 28 ist derart ausgelegt, dass der Luftdurchfluss in Richtung der Rücklaufsammelleitung 5 jedoch nicht umgekehrt, so wie durch den Pfeil 29 angegeben, erlaubt wird.

Auf bekannte Art und Weise ist die Vorlaufsammelleitung mit einem Lastventil 30 versehen.

Im Betrieb setzt die Druckpumpe den Zwischenraum des Tanks unter Druck. Eine Leckage in einem der Tanks hat eine Druckänderung in der Rücklaufsammelleitung 5 zur Folge und veranlasst den Eingriff der Förder- und Anzeigeanlage 1, die an ihrer Rotlichtanzeige 11 den A-larmzustand angibt. Um unter der Vielzahl von Tanks jenen fehlerhaften festzustellen, kann die Druckänderung am entsprechenden Manometer 26 festgestellt werden. Anstatt des Manometers klarerweise könnte jeder andere Abgriff bekannter Art vorgesehen sein, der fähig ist, eine Änderung des Druckzustandes im Zwischenraum des schadhaften Tanks zu erfassen.

Es ist klar, dass zahlreiche an der erfindungsgemäßen Anlage vorgenommene Varianten und Änderungen möglich sind, ohne den Erfindungsbereich zu verlassen:

So könnte z.B. anstatt der Verwendung einer Förder- bzw. Druckpumpe eine Vakuumpumpe Verwendung finden. In diesem Fall müssten die beiden Sperrventile in ihrer Betriebsweise umgekehrt sein, um den im Zwischenraum des schadhaften Tanks geänderten Unterdruckzustand anzugeben.

## Patentansprüche

1. Tankleckanzeigeanlage, umfassend eine Fluidspeise- und Anzeigeeinheit, die mit dem Zwischenraum eines Tanks verbunden ist, wobei die Fluidspeise- und Anzeigeeinheit (1) mit dem Zwischenraum einer Vielzahl von Tanks (22, 23, 24 , ...) Über eine Voriaufsammelleitung (3) verbunden ist, wobei von der Vorlaufsammelleitung (3) eine Vielzahl von Leitungen (16, 17, 18, 19, 20, 21) abgeleitet ist, die jeweils mit dem Zwischenraum von gleich vielen Tanks (22, 23, 24, ...) verbunden sind, **dadurch gekennzeichnet, dass** sie mit einer Rücklaufsammelleitung (5) versehen ist, wobei von jeder abgeleiteten Leitung (16, 17, 18, 19, 20, 21) ein Bypass-Rohr (31) abgeleitet ist, das mit einer Rücklaufsammelleitung (5) verbunden ist.

2. Anlage nach Anspruch 1, **dadurch gekennzeichnet, dass** zwischen der vorlaufsamnelleitung (3) und jedem Anschluss eines jeden Bypass-Rohrs (31) an der Rücklaufsammelleitung (5) ein Sperrventil (28) eingebracht ist.

3. Anlage nach den vorstehenden Ansprüchen, **dadurch gekenntzeichnet, dass** in jeder der abgeleiteten Leitungen (16, 17, 18, 19, 20, 21) der Sammelleitung (3) ein Manometer (26) eingebaut ist.

4. Anlage nach den vorstehenden Ansprüchen, **dadurch gekennzeichnete dass** das Bypass-Rohr (31) von jeder abgeleiteten Leitung (16, 17, 18, 19, 20, 21) wischen dem Sperrventil (27) und dem Manometer (26) abgeleitet ist.

5. Anlage nach den vorstehenden Ansprüchen, **dadurch gekennzeichnet, dass** die Rücklaufsammelleitung (5) mit einem Sicherheitsventil (32) versehen ist.

## Claims

1. A tank leak indicator arrangement for fluids comprising a fluid feeding and indication unit connected to the hollow space of a fluid tank, the fluid feeding and indication unit (1) being connected to the hollow space of a plurality of tanks (22, 23, 24, ...) via a delivery header conduit (3), a plurality of ducts (16, 17, 18, 19, 20, 21) connected to the hollow space of as many tanks (22, 23, 24, ...) branching off from the delivery header conduit (3), **characterised in that** it is provided with a return header conduit (5), one bypass duct (31) connected with a return header conduit (5) branching off from each conveying duct (16, 17, 18, 19, 20, 21).

2. Arrangement as claimed in claim 1, **characterised in that** between the delivery header conduit (3) and each attachment of each bypass duct (31) to the return header conduit (5), a one-way valve (28) is provided.

3. Arrangement as claimed in the preceding claims, **characterised in that** in each one of the ducts (16, 17, 18, 19, 20, 21) branching-off from the header conduit (3), a manometer (26) is provided.

4. Arrangement as claimed in the preceding claims, **characterised in that** the bypass duct (31) is branched off from the respective conveying duct (16, 17, 18, 19, 20, 21) between the one-way valve (27) and the manometer (26).

5. Arrangement as claimed in the preceding claims, **characterised in that** the return header conduit (5) is provided with a safety valve (32).

## Revendications

1. Système indicateur de fuite d'un réservoir de fluides comprenant une unité d'alimentation et d'indication de fluide reliée à l'espace vide d'un réservoir de fluide, l'unité d'alimentation et d'indication de fluide (1) étant reliée à l'espace vide d'une pluralité de réservoirs (22, 23, 24, ...) par un conduit collecteur de refoulement (3), une pluralité de tuyaux (16, 17, 18, 19, 20, 21) reliés à l'espace vide d'un égal nombre de réservoirs (22, 23, 24, ...) se ramifiant du conduit collecteur de refoulement (3), **caractérisé en ce qu'**il est muni d'un conduit collecteur de retour (5), un tuyau de dérivation (31) relié à un conduit collecteur de retour (5) se ramifiant de chaque tuyau d'alimentation (16, 17, 18, 19, 20, 21).

2. Système selon la revendication 1, **caractérisé en ce qu'**une soupape unidirectionnelle (28) est prévue entre le conduit collecteur de refoulement (3) et chaque attache de chaque tuyau de dérivation (31) au conduit collecteur de retour (5).

3. Système selon les revendications précédentes, **caractérisé en ce qu'**on prévoit un manomètre (26) dans chaque tuyau (16, 17, 18, 19, 20, 21) se ramifiant du conduit collecteur (3).

4. Système selon les revendications précédentes, **caractérisé en ce que** le tuyau de dérivation (31) se ramifie du respectif tuyau d'alimentation (16, 17, 18, 19, 20, 21) entre la soupape unidirectionnelle (27) et le manomètre (26).

5. Système selon les revendications précédentes, **caractérisé en ce que** le conduit collecteur de retour (5) est muni d'une soupape de sûreté (32).
